# EUROPÄISCHE PATENTANMELDUNG

(11) **EP 4 534 275 A1**
(43) Veröffentlichungstag der Anmeldung: **09.04.2025**
(21) Anmeldenummer: 24020300.0
(22) Anmeldetag: 03.10.2024
(51) Int. Cl.: B29C 65/10, B29C 65/78, B29C 65/00, E04D 15/04, E04D 15/06, B29L 31/00

(54) **VORRICHTUNG ZUM VERLEGEN EINER MATERIALBAHN UND VERFAHREN ZUM VERLEGEN EINER MATERIALBAHN**

(30) Priorität: 03.10.2023 DE 102023003954
(71) Anmelder: Rooffox GmbH, 86167 Augsburg (DE)
(72) Erfinder: Büttgen, Tobias, 86368 Gersthofen (DE)
(74) Vertreter: Prünte, Peter

(57) **Zusammenfassung**

Eine Vorrichtung (1) zum Verlegen einer Materialbahn (7) auf einer Fläche unter Einsatz von Heizmitteln ist dadurch gekennzeichnet, dass die Vorrichtung eine Antriebseinheit (9) mit einem Antriebsmotor zum selbständigen Vortrieb der Vorrichtung (1) und eine Steuereinrichtung zur Steuerung einer Heizung (10) zum Erwärmen der Materialbahn (7) vor und/oder während einer Verlegung der Materialbahn (7) auf der Fläche ausgestattet ist.

## Beschreibung

Die Erfindung bezieht sich auf eine Vorrichtung zum Verlegen einer Materialbahn auf einer Fläche unter Einsatz von Heizmitteln nach dem Oberbegriff des Patentanspruchs 1.

Erfindungsgemäß ist die Vorrichtung eine Antriebseinheit mit einem Antriebsmotor zum selbständigen Vortrieb der Vorrichtung und eine Steuereinrichtung zur Steuerung einer Heizung zum Erwärmen der Materialbahn vor und/oder während einer Verlegung der Materialbahn auf der Fläche ausgestattet.

Durch die Erfindung wird eine Vorrichtung geschaffen, durch die entweder eine Materialbahn auf einer Fläche, beispielsweise auf einer wenigstens annähernd ebenen oder leicht geneigten Fläche, beispielsweise eines Flachdachs durch Wärmeeinwirkung dauerhaft mit dieser Fläche verbunden wird. Alternativ oder zusätzlich wird eine erste Materialbahn mit einer weiteren bereits auf der Fläche verlegten Materialbahn im Bereich der Längskanten der beiden Materialbahnen miteinander durch Wärmeeinwirkung überlappend verschweißt. Alternativ werden beide Materialbahnen nicht überlappend, sondern auf Stoß mit der Fläche verschweißt. Die Materialbahnen werden auf ihrer, der Fläche zugewandten Unterseite entweder ganzflächig mit der Fläche verschweißt oder nur punktuell oder in Streifen, die in Längsrichtung verlaufen.

Die Vorrichtung bildet beispielsweise ein Schweißgerät zum Verbinden von überlappend oder auf Stoß verlegten, flächigen Materialbahnen, die entweder Dichtungsbahnen, beispielsweise aus Kunststoff, oder Dachbahnen, insbesondere Bitumenbahnen, sind. Die Vorrichtung umfasst ein von Rollen getragenes, durch einen eigenen Antriebsmotor angetriebenes Fahrgestell, mit einer Heizeinrichtung zum lokalen Erhitzen der Dichtungsbahnen.

Eine derartige Vorrichtung ist beispielsweise aus EP 1 900 501 A1 bekannt. Dichtungsbahnen werden miteinander verbunden, indem sie an den Randbereichen auf einander gegenüberliegenden Seiten lokal erhitzt und heiß zusammengepresst werden. Das Zusammenpressen erfolgt mit einer an dem Fahrgestell des Schweißgerätes angeordneten Anpressrolle, die das Fahrgestell zusammen mit anderen Rollen trägt.

Derartige Schweißgeräte können auch zum Verschweißen von Bitumen-Dichtungsbahnen verwendet werden. Bitumen ist ein thermoplastischer Stoff, d. h. seine Eigenschaften sind temperaturabhängig. Beim Abkühlen wird es hart, bei Erwärmung durchläuft es stufenlos alle Zustände von fest über zähflüssig bis dünnflüssig. Zum Schweißen der Bitumen-Dichtungsbahnen müssen diese erhitzt werden, bis das Bitumen an den zu verbindenden Stellen zumindest zähflüssig ist.

Der Erfindung liegt die Aufgabe zugrunde, eine Vorrichtung zu schaffen, die eine einfache Verlegung einer Materialbahn ermöglicht.

Erfindungsgemäß wird diese Aufgabe gelöst, wie in Patentanspruch 1 angegeben.

Dadurch, dass die Vorrichtung mit wenigstens einem Wickel einer Materialbahn beladen werden kann, einen eigenen Antriebsmotor, eine Heizeinrichtung und eine intelligente, selbstlernende programmierbare Steuerung hat, arbeitet die Vorrichtung autonom und verlegt die Materialbahn auf einer ebenen oder gering geneigten Fläche wie der Fläche eines Flachdachs, ohne dass ein Bediener in den Verlegeprozess eingreifen muss.

Die erfindungsgemäße Vorrichtung hat vorzugsweise Abmessungen, die selbst im nichtzusammengesteckten oder zusammengefügten Zustand nur unwesentlich über die Abmessungen eines Wickels einer Materialbahn, also beispielsweise einer Dachbahnrolle, hinausragen; vorzugsweise ist die Vorrichtung tragbar. Dann lässt sie sich auch über Leitern, Gerüstleitern, enge Treppenhäuser, über Wendeltreppen und dgl. in den Dachbereich schaffen.

Dort lässt sie sich einsetzen, um eine fachgerechte bituminöse Abdichtung der Attika, d. h., des Dachrandbereichs eines Flachdachs, durchzuführen, welche beispielsweise in Meterstücken erfolgt; es werden abgelängte Stücke der Dachbahn auf die Überdeckung einer Dachfläche, in Richtung der Höhe der Attika und die Breite der Attika aufgebracht. Die Abdichtung erfolgt zwei- bis dreilagig.

Vorteilhafte Weiterbildungen der Erfindung ergeben sich aus den Unteransprüchen und der Beschreibung, insbesondere in Verbindung mit den Zeichnungen.

Vorzugsweise weist die Vorrichtung eine Tragvorrichtung zur Aufnahme und Lagerung mindestens eines Wickels einer Materialbahn auf, die durch Transportmittel oder Tragrollen innerhalb der Vorrichtung abrollbar ist. Dabei wird beispielsweise mittels optischer Sensoren eine an der Materialbahn angebrachte Kennzeichnung erkannt, die das Ende der Materialbahn anzeigt. Mittels weiterer Sensoren wird der Anfang einer neuen, auf die Tragvorrichtung aufgebrachten Materialbahn erkannt; mittels der in der Tragvorrichtung angeordneten Steuerung wird der Anfang der neuen Materialbahn an das Ende der bereits verlegten Materialbahn angeschweißt oder angeklebt, wobei dies entweder überlappend oder auf Stoß erfolgt.

In einer besonderen Ausgestaltung der Vorrichtung ist vorgesehen, dass die Vorrichtung mit einer Keilanordnung zum teilweisen seitlichen Anheben einer auf der Fläche bereits verlegten Materialbahn und zum seitlichen Erwärmen der verlegten Materialbahn ausgestattet ist. In diesem Fall wird die bereits verlegte Materialbahn seitlich angehoben, um die neu zu verlegende Materialbahn unter den Bereich der Seitenkante der verlegten Materialbahn einzufügen und mit der Fläche unter ihr einerseits sowie mit dem Kantenbereich der verlegten Materialbahn von deren Unterseite zu verschweißen. Alternativ wird die neu zu verlegende Materialbahn auf den Seitenbereich der bereits verlegten Materialbahn durch die Hitzeeinwirkung aufgeschweißt oder verklebt.

Vorzugsweise umfasst die Vorrichtung eine von einer elektrischen Widerstandsheizung gebildete Heizung. Alternativ umfasst die Heizung einen Gasbrenner zur Erzeugung von Wärme oder von Heißluft, welche auf die Materialbahn aufgeblasen wird, um diese zu erwärmen.

Je nach dem zum Einsatz kommenden Schweiß- oder Klebeverfahren umfasst die Heizung eine Mehrzahl von Heizmitteln, durch die sich die Materialbahn punktuell oder über begrenzte Bereiche erwärmen lässt.

Zusätzlich ist mit Vorteil vorgesehen, dass die Heizung Thermosensoren umfasst, die die Erwärmung der Materialbahn punktuell oder bereichsweise ermitteln und dass die von den Thermosensoren zur Verfügung gestellten Temperaturmesswerte in einer Steuer- oder Regeleinrichtung, die vorzugsweise innerhalb der Vorrichtung ist, eingesetzt werden, um die Erwärmung der Materialbahn zu steuern bzw. zu regeln.

Ebenso ist vorzugsweise vorgesehen, dass die Antriebseinheit mit einer Steuer- oder Regeleinrichtung ausgestattet ist, durch die die Bewegung der Vorrichtung steuerbar bzw. regelbar ist.

Zusätzlich erweist es sich als vorteilhaft, wenn die Vorrichtung Mittel zur Führung der Materialbahn oder Führungsrollen oder Führungsleisten umfasst. Durch diese Führungsmittel wird die Materialbahn während des gleichzeitigen Vortriebs der von dem Antriebsmotor angetriebenen Vorrichtung von dem auf der Vorrichtung gelagerten Wickel abgewickelt und in die Verlegeposition gefördert, während sie gleichzeitig durch die Heizung an den vorgesehenen Positionen erwärmt wird.

Die Vorrichtung ist in einer weiteren bevorzugten Ausgestaltung als Roboter ausgebildet, der selbsttätig nach vorheriger Programmierung und unter Einsatz von Sensoren zur Erkennung der Fläche, die mit einer Bitumenbahn beschichtet werden soll, und der bereits mit Bitumenbahnen beschichteten Fläche eine Bitumenbahn auf einem Flachdach verlegt und durch Erwärmung auf dem Untergrund verklebt und mit dem Randstreifen einer bereits verlegten Bitumenbahn durch Wärmeeinsatz verbindet. Ein derartiger Roboter ist beispielsweise mit einer GPS-Steuerung ausgestattet, um selbsttätig die Koordinaten aufzufinden, an denen die Bitumenbahn verlegt werden soll. Innerhalb eines Netzwerks ist der Roboter beispielsweise mit einem CAN-Bus ausgestattet, d. h. , einem nachrichtenbasierten Protokoll, das es dem Roboter ermöglicht, mit einzelnen Systemen, Geräten und Controllern innerhalb eines Netzwerks zu kommunizieren.

In einer weiteren vorteilhaften Ausgestaltung umfasst die Vorrichtung wenigstens einen Näherungssensor zur Erkennung eines Hindernisses oder einer Begrenzung. Ein derartiger Näherungssensor kann auch als Absturzsicherung ausgestaltet sein, der die Annäherung der Vorrichtung an eine Kante der Fläche erkennt.

Die Erfindung betrifft auch ein Verfahren zum Verlegen einer Verlegen einer Materialbahn auf einer Fläche unter Einsatz von Heizmitteln.

Erfindungsgemäß ist dieses Verfahren dadurch gekennzeichnet, dass die Materialbahn von einer selbständig sich bewegenden Vorrichtung abgewickelt und unter Einsatz von Wärme auf einer Fläche abgelegt wird.

Mit Vorteil ist das Verfahren so ausgestaltet, dass die durch die Heizmittel erwärmte Materialbahn durch Andrückmittel oder durch eine Andrückrolle auf die Fläche angedrückt wird.

Ebenso ist es von Vorteil, wenn die Heizmittel eine bereits verlegte Materialbahn im Bereich der Längskante der verlegten Materialbahn erwärmen und eine von der Vorrichtung auf die Fläche aufzubringende Materialbahn an der Längskante auf die verlegte Materialbahn aufgedrückt wird oder unter deren Längskante eingeschoben wird.

Erfindungsgemäß wird ein vorzugsweise tragbares Schweißgerät geschaffen, das in der Lage ist, in einem automatisierten Vorgang und autonom Materialbahnen, insbesondere Bitumenbahnen, zu verlegen.

Gemäß einer ersten Ausführung weist die Vorrichtung einen Rahmen mit zwei Antriebsrädern und einem Motor auf.

Die Vorrichtung verlegt Materialbahnen entweder durch Verklebung mit einer darunterliegenden Fläche oder auch durch Verschweißung mit dem Randbereich einer bereits verlegten Bahn, indem die neu zu verlegende Bahn neben der verlegten Bahn geführt wird, wobei die neu verlegte Bahn entweder auf die bereits verlegte Bahn aufgelegt wird oder diese mittels einer Keilvorrichtung längs ihrer Längskante angehoben wird, so dass die neu zu verlegende Materialbahn mit ihrem Kantenbereich unter die bereits verlegte Materialbahn geschoben und dann verklebt werden kann.

Die abzuwickelnde Bahn läuft im Bereich der Vorrichtung vorzugsweise über Tragrollen. Die Bahn wird seitlich vorne und hinten mit verschiebbaren und feststellbaren Winkeln und/oder Führungsschienen in der vorgesehenen Spur gehalten, in der die Bahn verlegt werden soll. Die Vorrichtung wird mittels optischer Sensoren parallel zu einer bereits verlegten Bahn geführt. Anschließend wird die Bahn erhitzt durch heiße Luft mittels eines Heißluftgebläses oder durch wenigstens einen Gasbrenner. Insbesondere im Randbereich der Materialbahn ist vorzugsweise ein zusätzliches Erhitzungsgerät angebracht, das den Randbereich gesondert erhitzt, um eine einwandfrei erwärmte Randzone zu erhalten, so dass sich die Materialbahn überlappend auf oder unter eine bereits verlegte Bahn verlegen lässt oder dass die Materialbahn auf Stoß mit der bereits verlegten Bahn verlegt wird.

Danach wird die Materialbahn oder der von zwei nebeneinander verlegten Materialbahnen gebildete Stoß durch Anpresswalzen oder Anpressrollenn festgedrückt. In der Abfolge der Verlegevorgänge wird dafür Sorge getragen, dass die jeweils verlegte Bahn ausreichend abgekühlt ist, bevor die nächste Bahn verlegt wird.

In einer anderen Ausgestaltung der Erfindung ist vorgesehen, dass an der Vorrichtung eine Halterung oder Lagerung angebracht sein, auf der die Materialbahn, insbesondere eine Bitumenbahn, als Wickel gelagert ist und mittels eines Motors abgerollt wird. Wenn die Vorrichtung ausreichend lang genug ist, lassen sich auch zwei oder mehrere Wickel auf der Vorrichtung lagern, die nacheinander abgewickelt werden. Mittels einer Laserfunktion oder optischer Sensoren erkennt die Maschine Farbmarkierungen, die entweder auf der mit der Materialbahn zu beklebenden Fläche oder auf der Materialbahn selber angebracht sind. Derartige Farbmarkierungen dienen dazu, die Bewegungsrichtung der Vorrichtung zu steuern und notfalls zu korrigieren. Ein von einem Sensor oder einer Mehrzahl von Sensoren erfasstes Farbsignal erzeugt ein Eingangssignal für einen Signalgeber, der seinerseits den Antrieb des Antriebsmotors der Vorrichtung und die Heizung steuert. Ein Hindernis erkennt die Vorrichtung mittels eines Näherungssensors und schaltet die Motoren, insbesondere den Antriebsmotor, sowie die Heizeinrichtung ab.

In einer weiteren bevorzugten Ausgestaltung der Erfindung hat die Vorrichtung eine Schneideinrichtung, die manuell oder automatisch betätigt wird, um einen Schnitt in der Materialbahn durchführen, wenn die Vorrichtung am Ende einer Fläche, beispielsweise eines Flachdachs, angelangt ist.

Vorzugsweise ist die Vorrichtung auch mit Fallschutzsensoren ausgestattet, um an seitlichen Enden einer Dachfläche ohne überstehenden Mauerrand, d. h., ohne eine überkragende Attika, nicht herunterzufallen.

Vorzugsweise sind auch die Heizungsaggregate verstellbar, um die Heizleistung entsprechend der Qualität, Viskosität und Dicke der Materialbahn einzurichten. Hierzu sind die Brenner und Düsen verstellbar.

Vorzugsweise mittels einer Fernbedienung, beispielsweise von einem Mobiltelefon aus, wenn auf diesem eine geeignete Applikation installiert ist, oder mittels einer an der Vorrichtung selber angebrachten Bedienanordnung lässt die Vorrichtung über eine Funkverbindung bzw. direkt steuern oder programmieren. Beispielsweise lässt sich die Vortriebsgeschwindigkeit der Vorrichtung einstellen. Die Funktionen der Heizung lassen sich vorzugsweise separat für mehrere Düsen oder Brenner sowie auch alle zusammen einstellen oder steuern. Alternativ weist die Heizung eine automatische Steuerung auf, die die Plastizität der Materialbahn erkennt, beispielsweise am Durchhang, wenn die Materialbahn über eine gegenüber der Fläche erhöht angebrachte Rolle innerhalb der Vorrichtung geführt wird und dann entsprechend ihrer Plastizität durchhängt. Die Vorrichtung wird entweder rein elektrisch betrieben, alternativ jedoch auch mit einem Gasantrieb oder mit einem Benzinmotor.

Die Vorrichtung ist gemäß einer Ausgestaltung als Schweißgerät derart ausgestaltet, dass sie durch ihr Eigengewicht (und gegebenenfalls auf ihr gelagerter Materialbahnwickel) wenigstens eine Anpressrolle mit einem Hauptanteil ihres Gewichtes belastet, um einen hohen Anpressdruck für eine gute Schweißqualität sicherzustellen. Vorzugsweise lässt sich die Anpressrolle auch als Antriebsrolle auszubilden, da sie fest gegen den Untergrund gepresst wird und damit aufgrund ihres hohen Reibschlusses eine gute Krafteinleitung für die Vorwärtsbewegung sicherstellt. Eine solche angetriebene Anpressrolle wird bevorzugt an einem in Schweißrichtung hinteren Ende des Fahrgestells der Vorrichtung, im Anschluss an die Heizeinrichtung zum Erhitzen der Materialbahn oder Dachbahn oder Dichtungsbahn angeordnet.

Gemäß einer weiteren vorteilhaften Ausgestaltung wird eine in einem Wickel oder in einer Rolle angeordnete Materialbahn mittels einer Hubvorrichtung auf eine erfindungsgemäße Vorrichtung zum Verlegen der Materialbahn auf eine Traganordnung auf der Oberseite oder in einen Speicher oder in einem Traggestell eingebracht, der sich auf der Oberseite der Vorrichtung befindet, so dass die in dem Wickel angeordnete Materialbahn für einen nachfolgenden Verlegevorgang zur Verfügung steht, dass, nachdem eine vorherige Materialbahnrolle von der Vorrichtung vollständig verlegt worden ist, ein vorderseitiges Ende des Wickels automatisch von einer Verlegeeinheit der Vorrichtung erkannt wird. Anschließend wird dieses vorderseitige Ende von der Verlegeeinheit, beispielsweise zwischen zwei Führungsrollen, eingezogen und auf der Dachfläche aufgeschweißt. Hierzu sind Sensoren an der Vorrichtung vorgesehen, wobei vorzugsweise gleichzeitig das vorderseitige Ende einer einzuwechselnden Materialbahnrolle mittels Markierungen, beispielsweise QR-Codes, ausgestattet ist, aus denen eine Vielzahl von Informationen über die Materialbahn an eine Steuereinrichtung der Vorrichtung übermittelt wird, so dass die Vorrichtung beispielsweise die Temperatur berücksichtigt, bei der die Materialbahn vorzugsweise verlegt wird, insbesondere unter Berücksichtigung der Viskosität der Materialbahn, der Außentemperatur, die auf der Dachfläche herrscht, etc., so dass die Materialbahn auf eine optimale Temperatur erwärmt wird, um sie innerhalb der Vorrichtung abzuwickeln und sodann auf der Dachfläche zu verlegen und aufzuschweißen. Vorzugsweise lassen sich mehrere Rollen in einem Speicher auf der Oberseite der Vorrichtung zwischenspeichern.

Die Vorrichtung ist vorzugsweise mit einer Einrichtung zum automatischen Erkennen der Position ausgestattet, an der die nächste Bahn angeschweißt werden muss. Hierbei wird das Gerät vorzugsweise automatisch neu ausgerichtet, so dass es auf eine neue Position fährt.

Vorzugsweise ist die Vorrichtung mit einer über künstliche Intelligenz gesteuerte Software ausgestattet. Über Funkverbindungen (WLAN- oder Bluetooth-Technologie) findet es seine Orientierung auf der Dachfläche; die Vorrichtung ist ebenso mit einer Einrichtung zur automatischen Erkennung der für das Aufbringen und das Verschweißen der Materialbahn erforderlichen Hitze augestattet. Ebenso wird die Verfahrgeschwindigkeit der Vorrichtung gesteuert, um Bahnen unterschiedlicher Qualitäten, Dicken oder Materialien aufschweißen zu können. Es ist eine automatische Schneidvorrichtung vorhanden, um an einer Dachkante die Materialbahn abzuschneiden und um nach dem Wenden der Vorrichtung entlang der Kante der bereits verlegten Materialbahn mit dem Reststück der noch innerhalb der Vorrichtung abzuwickelnden Materialbahn den Abroll- und Schweißvorgang auf der Dachfläche fortzusetzen. Anhand von vorgegebenen Positionen und Markierungen ist die Vorrichtung auch imstande, Kurvenfahrten sowie Vorwärts- und Rückwärtsfahrten durchzuführen, wobei die Vorrichtung mit Hilfe von Abstand- und Entfernungssensoren sowie mittels Funktechnik Positionen automatisch erkennt. Ebenso ist die Vorrichtung vorzugsweise mit einer Einrichtung zum automatischen Ausmessen der Dachfläche ausgestattet, auf der Materialbahnen aufgeschweißt werden sollen. Insbesondere besteht dabei auch die Möglichkeit, schmalere Materialbahnstreifen zu verschweißen, die beispielsweise eine Breite von 50cm haben. Aufnahmeanordnungen zur Aufnahme von Materialbahnwickeln innerhalb der Vorrichtung haben hierzu vorzugsweise eine einstellbare Breite. Mittels einer an der Vorrichtung angeordneten Schneidvorrichtung sind vorzugsweise ebenfalls Diagonalschnitte möglich. Die Diagonalschnitte werden vorzugsweise derart vorgenommen, dass zwei Bahnstücke mit diagonal abgeschnittenen vorderen Kanten zusammengefügt werden können, beispielsweise unter einem rechten Winkel, so dass Wasser an den Diagonalen leicht abfließen kann, so dass diese Diagonalschnitte auch als Kapillarschnitte bezeichnet werden.

Falls erforderlich, lässt sich die in der Vorrichtung erzeugte Wärme auch auf die Dachfläche selber lenken, um den Untergrund für ein besseres Verkleben der Bahn zu erhitzen. Vorzugsweise wird beim Übergang von zwei Materialbahnen eine höhere Heiztemperatur angewendet.

Anschlüsse und Aufkantungen auf der Dachfläche werden von der Vorrichtung vorzugsweise automatisch erkannt und ausgemessen, geschnitten und anschließend verschweißt durch Aufbringen der Materialbahn; ebenso wird eine Attika, d. h., eine Mauer am Rande eines Flachdachs, durch die Vorrichtung erkannt, beispielsweise mittels Lasermessung oder einer ähnlichen Messmethode. Vorzugsweise weist die Vorrichtung Effektoren oder Haltemittel auf, um die Materialbahn festzuhalten, in eine gewünschte Position zu bringen und die Materialbahn anschließend in eine Position zu bringen, fachgerecht anzudrücken, insbesondere an Wänden, Anschlüssen und Aufkantungen, Mauern und Attiken, an Innen- und Außenecken und anschließend zu verschweißen.

Nachstehend wird die Erfindung in einem Ausführungsbeispiel näher erläutert. Es zeigen:
- Fig. 1: eine seitliche Ansicht einer Vorrichtung zum Verlegen einer in einem Wickel auf ihr aufgebrachten Materialbahn und
- Fig. 2: eine Draufsicht auf die Vorrichtung.

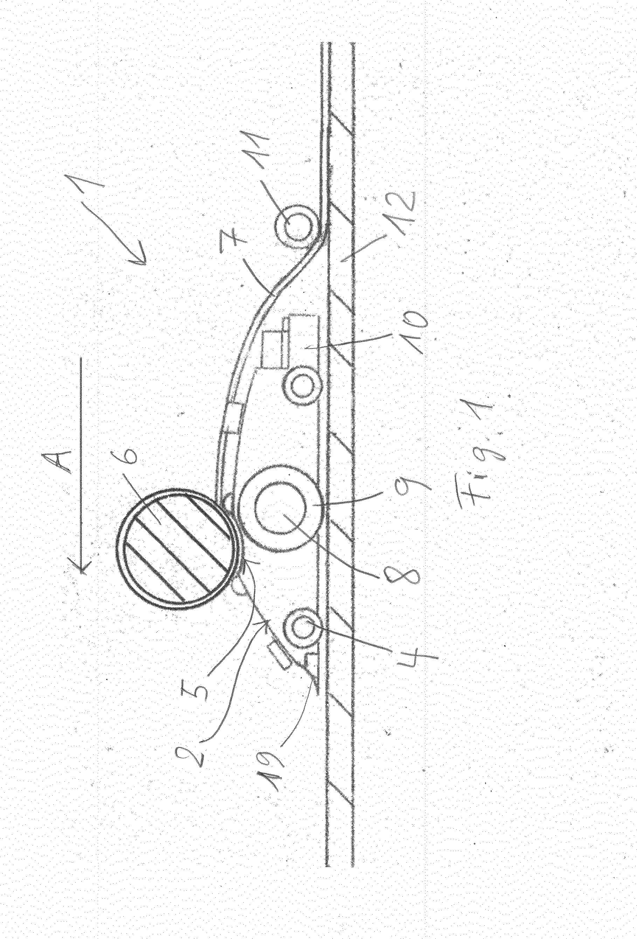

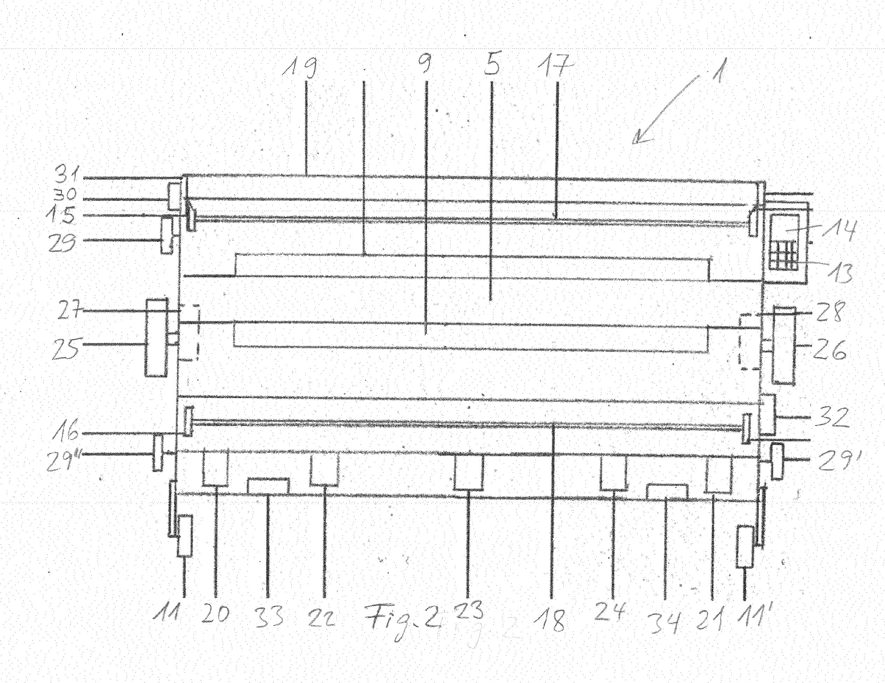

Eine Vorrichtung 1 (Fig. 1, 2) weist ein Gestell oder einen Tragrahmen 2 auf, der beispielsweise eine Mehrzahl von vorzugsweise im rechten Winkel zueinander angeordneten Tragrohren 3 umfasst, die dem Tragrahmen 2 die nötige Stabilität verleihen und die beispielsweise durch leicht lösbare Steck- oder Schraubverbindungen miteinander verbunden sind.

Die Vorrichtung 1 weist Räder oder Rollen 4 auf, die vorzugsweise ebenfalls entfernbar angebracht sind, beispielsweise ebenfalls mittels Steckverbindungen.

Auf der Oberseite des Tragrahmens 2 ist eine Tragmulde 5 vorgesehen, die einen Wickel 6 einer abzuwickelnden Materialbahn 7, beispielsweise einer Bitumenbahn, trägt.

Die Materialbahn 7 wird durch eine von einem in ihrem Inneren angeordneten Direktantriebsmotor 8 angetriebene Antriebsrolle 9, die mit dem Wickel 6 im Reibungseingriff steht, von dem Wickel 6 abgewickelt und über die Oberseite des Tragrahmens 2 nach hinten von der Vorrichtung 1 abgeführt, während sich diese in Richtung eines Pfeils A bewegt.

Im Inneren der Vorrichtung ist ein Gasbrenner 10 mit einer Vielzahl von Heizdüsen angeordnet, der die Materialbahn 7 von ihrer Unterseite erwärmt, während diese über den Tragrahmen 2 hinweggeführt wird. Anschließend wird die erwärmte Materialbahn 7 durch als Anpressrollen wirkende Rollen 11, 11' gegen eine Fläche 12 angedrückt, auf die die Materialbahn 7 aufgeschweißt oder die mit der Materialbahn 7 bedeckt werden soll. Alternativ wird der Rand der Materialbahn 7 auf den Rand einer bereits auf der Fläche verlegten Materialbahn aufgeklebt, so dass zwei Materialbahnen 7 entlang ihrer Längskanten einander überlappen. Die Rolle 11 ist vorzugsweise über ein Getriebe mit der Antriebsrolle 9 in Wirkverbindung, welche Teil der Antriebseinheit der Vorrichtung 1 ist.

Die Vorrichtung 1 ist mit einem Bedientableau 13 in Verbindung mit einem Bildschirm 14 ausgestattet. Alternativ wird die Vorrichtung 1 über eine Funkverbindung, beispielsweise nach dem Bluetooth-Standard, über ein externes Bediengerät bedient, beispielsweise von einem Mobiltelefon, auf dem eine entsprechende Applikation für die Vorrichtung 1 installiert ist.

Über verstellbare Anschläge 15, 16 wird festgelegt, in welchem Abstand zu einer bereits verlegten Bahn, beispielsweise in Hinblick auf eine überlappende Verlegung, oder zu auf einer Fläche angebrachten Markierungen für die von der Vorrichtung zu fahrende Route die Vorrichtung 1 sich bewegen soll. Die Anschläge 15, 16 sind jeweils auf Führungsschienen 17 bzw. 18 angeordnet.

An ihrer vorderen Kante weist die Vorrichtung 1 ein Blech 19 auf, das geeignet ist, um eine auf der Fläche bereits verlegte Materialbahn an ihrer Längsseite anzuheben, um die zu verlegende Materialbahn 7 im Bereich von deren Längskante unter die verlegte Materialbahn zu verlegen.

Seitliche Heißluftdüsen 20, 21 oder andere Erwärmungsmittel, beispielsweise Wärmestrahler, stehen mit dem Gasbrenner 10 in Verbindung und erzeugen einen Heißluftstrom zur Herabsetzung der Plastizität der Materialbahn 7 und/oder zusätzlich einer bereits neben der Materialbahn 7 verlegten Materialbahn, um eine bessere Verschweißung oder Verbindung zwischen beiden Materialbahnen 7 zu bewirken.

Über die Breite der Vorrichtung 1 sind weitere Heizmittel 22, 23, 24 verteilt angeordnet. Antriebsräder 25, 26 stehen mit der Antriebsrolle 9, beispielsweise über Zahnräder, in kraftschlüssiger Verbindung. Alternativ werden die Antriebsräder 25, 26 jeweils durch eigene Motoren 27 bzw. 28 angetrieben. Ferner sind Lenkrollen 29, 29', 29" vorhanden. Die Vorrichtung 1 weist beispielsweise die zwei Motoren 27, 28 als Antriebsmotoren für die Lenkrollen auf. Alternativ ist ein Servo-Motor in Verbindung mit einem Lenkmechanismus eingebaut, so dass die Lenkrollen 29, 29', 29" wie bei einem Personenkraftwagen gelenkt werden.

Ein Näherungssensor 30 erlaubt es, die Vorrichtung 1 an vorgegebenen Stellen anhand von Markierungen, beispielsweise Farbmarkierungen, zu stoppen. Ein Fallsensor 31 erkennt, ob die Vorrichtung 1 von allen Laufrädern, beispielsweise den Antriebsrädern 25, 26 oder den Lenkrollen 29 bis 29", unterstützt wird, und verhindert ein Herunterfallen der Vorrichtung 1 von einem Flachdach.

Ferner ist ein Messgerät 32, beispielsweise ein Lasermessgerät, vorhanden, das erkennt, ob sich die Vorrichtung 1 entlang einer vorgegebenen Spur bewegt. Bei Abweichung gibt das Messgerät 32 Signale an die Steuerung, die entsprechend die Bewegungsroute der Vorrichtung 1 korrigiert.

Sensoren 33, 34 dienen zur Messung der Temperatur, insbesondere im Bereich der zu verlegenden Materialbahn 7. Auch die Sensoren 33, 34 stehen mit einer Steuer- oder Regeleinheit der Vorrichtung 1 in Verbindung, um Abweichung der gemessenen Temperaturen von der Soll-Temperatur zu korrigieren.

Vorzugsweise ist die Vorrichtung 1 mit einer Schneidvorrichtung ausgestattet, wie sie aus EP 3 628 614 B1 bekannt ist.

## Patentansprüche

1. Vorrichtung (1) zum Verlegen einer Materialbahn (7) auf einer Fläche (12) unter Einsatz von Heizmitteln,
**dadurch gekennzeichnet,**
**dass** die Vorrichtung eine Antriebseinheit (9) mit einem Antriebsmotor zum selbständigen Vortrieb der Vorrichtung (1) und eine Steuereinrichtung zur Steuerung einer Heizung (10; 22, 23, 24) zum Erwärmen der Materialbahn (7) vor und/oder während einer Verlegung der Materialbahn (7) auf der Fläche (12) ausgestattet ist.

2. Vorrichtung (1) nach Anspruch 1,
**dadurch gekennzeichnet,**
**dass** die Vorrichtung (1) eine Tragvorrichtung, insbesondere eine Tragmulde (5), zur Aufnahme und Lagerung eines Wickels (6) einer Materialbahn (7) umfasst, die durch Transportmittel oder Tragrollen innerhalb der Vorrichtung abrollbar ist.

3. Vorrichtung (1) nach Anspruch 1 oder 2,
**dadurch gekennzeichnet,**
**dass** die Vorrichtung (1) mit einer Keilanordnung zum teilweisen seitlichen Anheben einer auf der Fläche (12) bereits verlegten Materialbahn (7) und zum seitlichen Erwärmen der verlegten Materialbahn ausgestattet ist.

4. Vorrichtung (1) nach einem der Ansprüche 1 bis 3,
**dadurch gekennzeichnet,**
**dass** die Heizung eine elektrische Widerstandsheizung oder einen Gasbrenner (10) zur Erzeugung von Wärme oder von Heißluft umfasst.

5. Vorrichtung (1) nach einem der Ansprüche 1 bis 4,
**dadurch gekennzeichnet,**
**dass** die Heizung eine Mehrzahl von Heizmitteln (10; 22, 23, 24) umfasst, durch die die Materialbahn (7) punktuell oder über begrenzte Bereiche erwärmbar ist.

6. Vorrichtung (1) nach einem der Ansprüche 1 bis 5,
**dadurch gekennzeichnet,**
**dass** die Heizung (10; 22, 23, 24) Thermosensoren umfasst, die die Erwärmung der Materialbahn (7) punktuell oder bereichsweise ermittelt und dass die von den Thermosensoren zur Verfügung gestellten Temperaturmesswerte in einer Steuer- oder Regeleinrichtung einsetzbar sind, um die Erwärmung der Materialbahn (7) zu steuern bzw. zu regeln.

7. Vorrichtung (1) nach einem der Ansprüche 1 bis 6,
**dadurch gekennzeichnet,**
**dass** die Antriebseinheit (9) mit einer Steuer- oder Regeleinrichtung ausgestattet ist, durch die die Bewegung der Vorrichtung (1) steuerbar bzw. regelbar ist.

8. Vorrichtung (1) nach einem der Ansprüche 1 bis 7,
**dadurch gekennzeichnet,**
**dass** sie Mittel zur Führung der Materialbahn (7) oder Lenkrollen (29, 29', 29") oder Führungsleisten umfasst.

9. Vorrichtung (1) nach einem der Ansprüche 1 bis 8,
**dadurch gekennzeichnet,**
**dass** sie wenigstens einen Näherungssensor (30) zur Erkennung eines Hindernisses oder einer Begrenzung umfasst.

10. Verfahren zum Verlegen einer Materialbahn (7) auf einer Fläche (12) unter Einsatz von Heizmitteln (10; 22, 23, 24),
**dadurch gekennzeichnet,**
**dass** die Materialbahn (7) von einer selbständig sich bewegenden Vorrichtung (1) abgewickelt und unter Einsatz von Wärme auf einer Fläche (12) abgelegt wird.

11. Verfahren nach Anspruch 10,
**dadurch gekennzeichnet,**
**dass** die durch die Heizmittel (10; 22, 23, 24) erwärmte Materialbahn (7) durch Andrückmittel oder durch eine Andrück- oder Anpressrolle (11, 11') auf die Fläche (12) angedrückt wird.

12. Verfahren nach Anspruch 10,
**dadurch gekennzeichnet,**
**dass** die Heizmittel (10; 22, 23, 24) eine bereits verlegte Materialbahn im Bereich der Längskante der verlegten Materialbahn erwärmen und dass eine von der Vorrichtung auf die Fläche (12) aufzubringende Materialbahn an der Längskante auf die verlegte Materialbahn aufgedrückt wird oder unter deren Längskante eingeschoben wird.
